# FASCICULE DE BREVET EUROPEEN

(11) **EP 1 908 258 B1**
(45) Date de publication et mention de la délivrance du brevet: **06.09.2017**
(21) Numéro de dépôt: 06794186.4
(22) Date de dépôt: 17.07.2006
(51) Int. Cl.: G08G 5/00, H04L 29/08, H04L 29/06, H04B 7/185

(54) **SYSTÈME DE TRANSMISSION DE DONNÉES POUR AERONEF**
DATENÜBERTRAGUNGSSYSTEM FÜR FLUGZEUG
AIRCRAFT DATA TRANSMISSION SYSTEM

(30) Priorité: 27.07.2005 FR 0508008
(43) Date de publication de la demande: 09.04.2008
(73) Titulaire: AIRBUS OPERATIONS (SAS), 31060 Toulouse (FR)
(72) Inventeur: GALY, Laurent, F-31530 Saint Paul sur Save (FR); BARON, Dominique, F-31770 Colomiers (FR)
(74) Mandataire: Gevers & Orès
(86) Numéro de dépôt international: PCT/FR2006/001739
(87) Numéro de publication internationale: WO 2007/012727

(56) Documents cités:
- WO-A-2004/045106
- US-B1- 6 181 990
- "Information technology - ASN.1 encoding rules: Specification of Packet Encoding Rules (PER)" ITU-T. X.691, juillet 2002 (2002-07), XP002377427
- W. STALLINGS: "Data and Computer Communications, 4th edition." 1994, MACMILLAN PUBLISHING COMPANY , US , XP002377430 pages 636-672

## Description

La présente invention concerne un système de transmission de données qui est embarqué sur un aéronef, en particulier un avion de transport, et qui est destiné à la transmission de données entre l'aéronef et au moins un poste de transmission situé à l'extérieur dudit aéronef, lors d'une communication interne/externe.

Les documents WO2004045106 et US6181990 décrivent des systèmes de communications interne/externe embarqués sur un aéronef.

Le document XP002377427, "Information technology - ASN.1 encoding rules: Spécification of Packet Encoding Rules (PER)", ITU-T. X.691 décrit le codage de type PER.

Bien que non exclusivement, ledit poste de transmission est situé de préférence au sol de sorte que ladite communication interne/externe représente une communication de données usuelle de type sol/bord, entre l'équipage de l'aéronef et un poste situé au sol et destiné en particulier au contrôle aérien. Les données transmises lors d'une telle communication sol/bord sont en général codées et normalisées pour des raisons d'optimisation des performances de transmission et d'interopérabilité entre l'équipage de l'aéronef et le poste situé au sol.

On sait en outre qu'un tel système de transmission de données comporte généralement :
- un dispositif d'émission/réception qui est susceptible d'émettre à l'extérieur de l'aéronef des messages de données sortants et de recevoir de l'extérieur de l'aéronef des messages de données entrants, lesdits messages entrants et sortants qui transitent par ledit dispositif d'émission/réception étant codés ;
- un-dispositif de gestion de messages :
   ▪ qui est relié audit dispositif d'émission/réception ;
   ▪ qui reçoit lesdits messages entrants codés dudit dispositif d'émission/réception et qui transmet lesdits messages sortants codés audit dispositif d'émission/réception ; et
   ▪ qui comporte un moyen de codage/décodage susceptible de réaliser un codage/décodage, par exemple de type PER précisé ci-dessous, ledit moyen de codage/décodage décodant lesdits messages entrants codés de manière à former des messages entrants décodés et codant des messages sortants décodés de manière à former lesdits messages sortants codés ; et
- au moins un moyen d'interface homme/machine :
   ▪ qui est relié audit dispositif de gestion de messages ;
   ▪ qui est susceptible de présenter à un opérateur les messages entrants décodés, qui sont issus dudit dispositif de gestion de messages et qui proviennent dudit poste de transmission situé à l'extérieur dudit aéronef ; et
   ▪ qui permet à un opérateur d'engendrer des messages représentant des messages sortants décodés, qui sont ensuite transmis audit dispositif de gestion de messages et qui sont destinés audit poste de transmission situé à l'extérieur dudit aéronef.

En raison d'un nombre de plus en plus élevé de communications de données entre le sol et les avions, notamment les avions de transport, les autorités de certification (EASA) ont imposé [par le biais d'une directive de certification ("Certification Review Item : CRI-F26 Issue 03", en date du 30 juin 2003) basée sur un document normalisé ED112 ("Minimum operational performance specification for crash protected airborne recorder systems" édition de mars 2003) et un document ED93 ("Minimum aviation system performance specification for CNS/ATM message recording systems" de novembre 1998)] l'enregistrement, au niveau de l'enregistreur de conversations du poste de pilotage ("Cockpit Voice Recorder" en anglais), de l'ensemble des échanges de données, réalisés entre l'équipage et le sol. Cet enregistrement de données est rendu obligatoire pour tout avion dont la certification de type intervient après le 1 er janvier 2005.

Pour répondre à cette obligation, il convient donc de prévoir des moyens à bord de l'aéronef, pour enregistrer lesdites communications sol/bord ou interne/externe (par rapport à l'aéronef). Un tel agencement présente toutefois quelques inconvénients.

L'ajout de nouveaux moyens est parfois difficile à mettre en oeuvre, et souvent coûteux et encombrant. De plus, un tel ajout rend plus complexe l'architecture dudit système de transmission de données.

En outre, comme l'enregistreur de conversations du poste de pilotage doit enregistrer au minimum deux heures de communication et que le volume de données à enregistrer est très variable en fonction de la communication entre les contrôleurs au sol et l'équipage de l'aéronef, le volume de stockage à prévoir doit être particulièrement élevé, ce qui a bien entendu une influence négative sur le coût et l'encombrement.

La présente invention concerne un système de transmission de données qui permet de remédier aux inconvénients précités.

Selon l'invention, le système de transmission de données, qui est embarqué sur un aéronef et qui est destiné à la transmission de données entre l'aéronef et au moins un poste de transmission situé à l'extérieur dudit aéronef, lors d'une communication interne/externe, en particulier une communication sol/bord, ledit système de transmission de données comportant :
- un dispositif d'émission/réception qui est susceptible d'émettre à l'extérieur de l'aéronef des messages de données sortants et de recevoir de l'extérieur de l'aéronef des messages de données entrants, lesdits messages entrants et sortants qui transitent par ledit dispositif d'émission/réception étant codés ;
- un dispositif de gestion de messages :
   ▪ qui est relié audit dispositif d'émission/réception ;
   ▪ qui reçoit lesdits messages entrants codés dudit dispositif d'émission/réception et qui transmet lesdits messages sortants codés audit dispositif d'émission/réception ; et
   ▪ qui comporte un moyen de codage/décodage susceptible de réaliser un codage/décodage de type PER, ledit moyen de codage/décodage décodant lesdits messages entrants codés de manière à former des messages entrants décodés et codant des messages sortants décodés de manière à former lesdits messages sortants codés ; et
- au moins un moyen d'interface homme/machine :
   ▪ qui est relié audit dispositif de gestion de messages ;
   ▪ qui est susceptible de présenter à un opérateur les messages entrants décodés, qui sont issus dudit dispositif de gestion de messages et qui proviennent dudit poste de transmission situé à l'extérieur dudit aéronef ; et
   ▪ qui permet à un opérateur d'engendrer des messages représentant des messages sortants décodés, qui sont ensuite transmis audit dispositif de gestion de messages et qui sont destinés audit poste de transmission situé à l'extérieur dudit aéronef,
est remarquable en ce que :
- ledit système comporte, de plus, un dispositif de codage qui réalise un codage de type PER pour tout message de données non codé, qui est relatif à ladite communication interne/externe, qui transite par ledit dispositif de gestion de messages et qui est destiné à être enregistré, dans le but de réaliser une compression de ces messages de données ;
- ledit dispositif de codage comprend au moins une fonction de codage dudit moyen de codage/décodage qui est intégré dans ledit dispositif de gestion de messages ; et
- ledit système comporte, de plus, un dispositif d'enregistrement qui est relié audit dispositif de codage et qui est formé de manière à enregistrer, sur au moins un support d'enregistrement, tout message de données entrant ou sortant, qui est relatif à ladite communication interne/externe, qui transite par ledit dispositif de gestion de messages et qui est codé selon un codage de type PER.

Ainsi, grâce à l'invention, les données à enregistrer sont toutes préalablement comprimées, en étant toutes soumises à un codage de type PER, qui correspond à un codage selon un standard international défini dans le document "EUROCAE ED-100" ("Interoperability Requirements for ATS Applications using ARINC 622 Data Communications final draft (RTCA DO-258)", septembre 2000). De façon usuelle, un codage correspond à une transformation de données au moyen d'un code, ce qui permet leur représentation sous une forme différente, et offre la possibilité de revenir à leur forme d'origine, par l'intermédiaire d'un décodage correspondant. Toutefois, en plus de coder les données de cette manière, un codage PER réalise également une compression desdites données, c'est-à-dire une modification de ces données de manière à réduire leur volume. Par conséquent, on peut prévoir un volume de stockage réduit pour ledit support d'enregistrement qui est destiné à enregistrer toutes les données (ainsi comprimées) relatives à la communication interne/externe. Ceci permet notamment de réduire le coût et l'encombrement dudit support d'enregistrement.

En outre, comme grâce à l'invention, ledit dispositif de codage utilise la fonction de codage du moyen de codage/décodage existant dans le système de transmission de données (pour le codage/décodage usuel des messages entrants et sortants), il n'est pas nécessaire de prévoir de dispositif de codage spécifique (plus précisément de dispositif de compression spécifique).

De plus, comme ledit dispositif de codage est ainsi intégré directement dans le dispositif de gestion de messages, par lequel transitent tous les messages à enregistrer, il n'est pas nécessaire de prévoir de moyen particulier pour réceptionner ces messages à enregistrer. Ces derniers sont en effet tous directement accessibles, dans ledit dispositif de gestion de messages, au dispositif d'enregistrement qui est relié audit dispositif de codage.

Par conséquent, les caractéristiques précitées conformes à l'invention présentent un coût et un encombrement réduits, et ne compliquent pas l'architecture du système de transmission de données.

Dans un premier mode de réalisation, ledit dispositif de codage engendre (et transmet audit dispositif d'enregistrement) une trame comportant une trame de type PER comprenant au moins un message de données, ainsi que des informations supplémentaires telles que l'heure par exemple.

En outre, dans un second mode de réalisation, ledit dispositif de codage engendre (et transmet audit dispositif d'enregistrement) une trame contenant toutes les données à enregistrer. Cette mise en oeuvre passe par la définition d'une syntaxe plus complète que celle utilisée dans le cadre de la communication interne/externe, de préférence les échanges sol/bord. Cette trame est toujours émise par la fonction de traitement des messages.

La présente invention concerne également un ensemble de communication comportant au moins :
- un système de transmission de données qui est embarqué sur un aéronef ; et
- un poste de transmission de données qui est situé à l'extérieur de l'aéronef, en particulier un poste de contrôle aérien situé au sol.

Selon l'invention, ledit système de transmission de données dudit ensemble de communication est du type de celui précité.
Les figures du dessin annexé feront bien comprendre comment l'invention peut être réalisée. Sur ces figures, des références identiques désignent des éléments semblables.
La figure 1 est le schéma synoptique d'un système de transmission de données conforme à l'invention.
La figure 2 illustre schématiquement un ensemble de communication conforme à l'invention et comprenant un système de transmission de données.

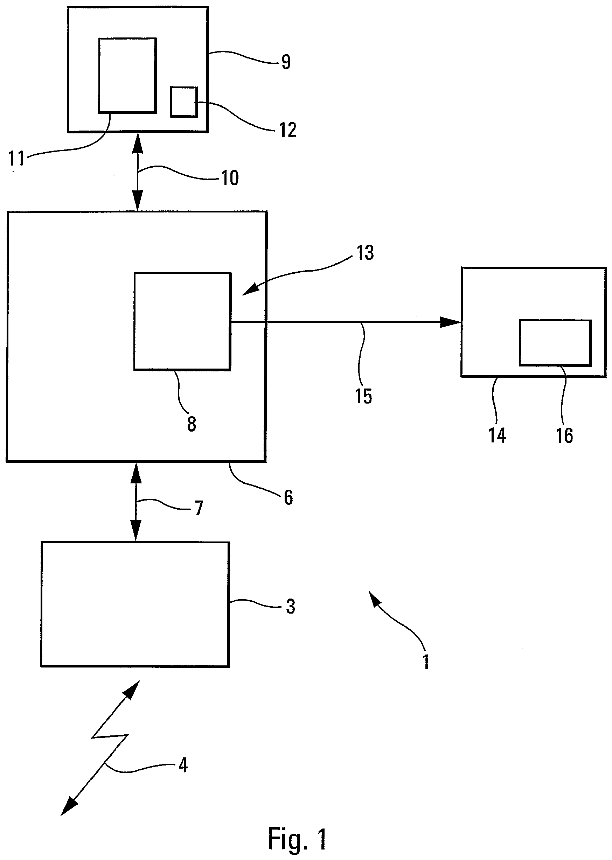

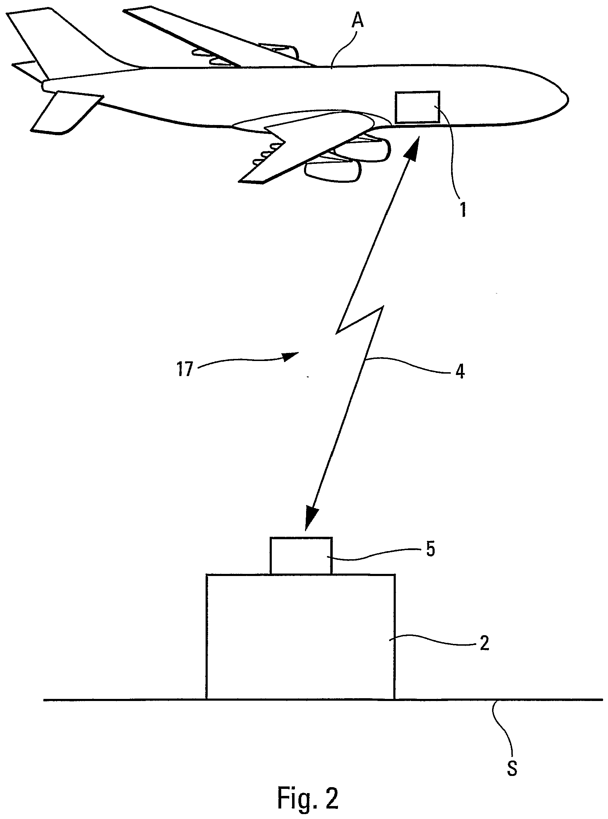

Le système de transmission de données 1 conforme à l'invention et représenté schématiquement sur la figure 1, est embarqué sur un aéronef A, en particulier un avion, et est destiné à la transmission de données entre l'aéronef A et au moins un poste de transmission de données 2, situé à l'extérieur dudit aéronef A. Cette transmission de données est réalisée lors d'une communication, dite "interne/externe" dans le cadre de la présente invention, c'est-à-dire entre l'intérieur et l'extérieur de l'aéronef A. Bien que non exclusivement, ladite communication interne/externe est de préférence une communication de type usuel sol/bord, entre l'équipage de l'aéronef A et un poste 2 situé au sol S et destiné en particulier au contrôle aérien, comme représenté sur la figure 2. Toutefois, cette communication interne/externe peut également être une communication entre l'équipage de l'aéronef A et l'équipage d'un autre mobile (aérien, terrestre ou maritime), en particulier d'un autre aéronef.

Ledit système de transmission de données 1 est du type comportant :
- un dispositif d'émission/réception 3 qui est susceptible d'émettre à l'extérieur de l'aéronef A, par exemple par l'intermédiaire d'ondes électromagnétiques 4, des messages de données sortants, et de recevoir de l'extérieur dudit aéronef A, également par l'intermédiaire d'ondes électromagnétiques 4 qui sont émises par un moyen 5 approprié dudit poste de transmission 2, des messages de données entrants. Bien entendu, ce dispositif d'émission/réception 3 peut correspondre à tout type de dispositif connu permettant une émission/réception de données entre l'aéronef A et un poste de transmission 2 externe. De plus, lesdits messages de données entrants et sortants, qui transitent entre l'extérieur et ledit dispositif d'émission/réception 3, sont tous codés, comme précisé ci-dessous ;
- un dispositif de gestion de messages 6 :
   ▪ qui est relié par l'intermédiaire d'une liaison double 7 audit dispositif d'émission/réception 3 ;
   ▪ qui reçoit lesdits messages entrants codés dudit dispositif d'émission/réception 3 ;
   ▪ qui transmet lesdits messages sortants codés audit dispositif d'émission/réception 3 ; et
   ▪ qui comporte un moyen de codage/décodage 8, susceptible de réaliser un codage/décodage de type PER. Un codage de type PER représente un codage usuel selon un standard international qui est défini dans le document "EUROCAE ED-100" précité. Ledit moyen de codage/décodage 8 comprend à cet effet, d'une part, une fonction de décodage qui décode les messages entrants codés de manière à former des messages entrants décodés, et, d'autre part, une fonction de codage qui code les messages sortants décodés de manière à former lesdits messages sortants codés ; et
- au moins un moyen d'interface homme/machine 9 :
   ▪ qui est relié par l'intermédiaire d'une liaison double 10 audit dispositif de gestion de messages 6 ;
   ▪ qui est susceptible de présenter, par exemple sur un écran de visualisation 11, à un opérateur de l'aéronef A, en particulier à un pilote, les messages entrants décodés, qui sont issus dudit dispositif de gestion de messages 6 et qui proviennent dudit poste de transmission 2 situé à l'extérieur de l'aéronef A ; et
   ▪ qui permet à un opérateur d'engendrer, à l'aide d'un moyen approprié 12, par exemple un clavier alphanumérique ou une souris d'ordinateur, des messages représentant des messages sortants décodés, qui sont ensuite transmis audit dispositif de gestion de messages 6 et qui sont destinés au poste de transmission 2 situé à l'extérieur de l'aéronef A, par exemple au sol S.

Par conséquent, un message entrant est émis, de manière codée, par l'intermédiaire du moyen 5 du poste de transmission 2. Ce message entrant codé est réceptionné par le dispositif d'émission/réception 3, et il est transmis, par l'intermédiaire de la liaison 7, au dispositif de gestion de messages 6. Ce dernier décode ce message entrant codé, par l'intermédiaire du moyen de codage/décodage 8, de manière à former un message entrant décodé qui est ensuite transmis au moyen d'interface homme/machine 9 par l'intermédiaire de la liaison 10. Ledit moyen d'interface 9 présente finalement ce message entrant décodé à l'opérateur, par exemple par l'intermédiaire de l'écran de visualisation 11.

En outre, un message sortant est engendré par l'opérateur, par exemple par l'intermédiaire du moyen 12 dudit moyen d'interface homme/machine 9. Ledit moyen d'interface 9 transmet ce message sortant, non codé, au dispositif de gestion de messages 6 par l'intermédiaire de la liaison 10. Ce dernier code ce message sortant, par l'intermédiaire du moyen de codage/décodage 8, de manière à former un message sortant codé qui est transmis par l'intermédiaire de la liaison 7 au dispositif d'émission/réception 3. Ledit dispositif d'émission/réception 3 peut finalement transmettre ce message sortant codé audit poste de transmission 2 situé au sol S, par exemple sous forme d'ondes électromagnétiques 4.

Selon l'invention, pour pouvoir enregistrer toutes les données relatives à une communication interne/externe :
- ledit système 1 comporte, de plus, un dispositif de codage (ou de compression) 13 qui effectue une compression de données, en réalisant un codage de type PER pour tout message de données (non codé et donc non comprimé) :
   ▪ qui est relatif à ladite communication interne/externe ;
   ▪ qui transite par ledit dispositif de gestion de messages 6 ; et
   ▪ qui est destiné à être enregistré, comme précisé ci-dessous ;
- ledit dispositif de codage 13 comprend la fonction de codage dudit moyen de codage/décodage 8 qui, comme précisé ci-dessus, est directement intégré dans ledit dispositif de gestion de messages 6 ; et
- ledit système 1 comporte, de plus, un dispositif d'enregistrement 14 qui est relié par l'intermédiaire d'une liaison 15 audit dispositif de codage 13 et qui est formé de manière à enregistrer, sur au moins un support d'enregistrement 16 usuel, tout message de données entrant ou sortant, qui est relatif à ladite communication interne/externe, qui transite par ledit dispositif de gestion de messages 6, et qui est codé selon un codage de type PER (et donc comprimé).

Ainsi, grâce à l'utilisation d'un codage de type PER ("ISO-8825-2"), qui représente, comme indiqué ci-dessus, un codage usuel selon un standard international défini dans le document "EUROCAE ED-100" précité, le système 1 conforme à l'invention réduit le volume des données (relatives à ladite communication interne/externe) devant être enregistrées, ce qui permet de réduire considérablement le volume de stockage dudit support d'enregistrement 16. En effet, un codage de type PER réalise, en plus du codage proprement dit, une compression de données, qui est suffisamment importante pour obtenir un tel résultat.

Dans un mode de réalisation préféré, ledit dispositif d'enregistrement 14 correspond à l'enregistreur de conversations du poste de pilotage de l'aéronef A, de type CVR ("Cockpit Voice Recorder" en anglais).

En outre, comme grâce à l'invention, ledit dispositif de codage (ou de compression) 13 utilise la fonction de codage du moyen de codage/décodage 8 existant dans le système 1 (pour le codage/décodage des messages entrants et sortants, comme indiqué précédemment), il n'est pas nécessaire de prévoir de dispositif de codage (plus précisément de compression) spécifique pour réduire le volume des données à enregistrer.

De plus, comme ledit dispositif de codage 13 est ainsi intégré directement dans le dispositif de gestion de messages 6, par lequel transitent tous les messages à enregistrer, il n'est pas nécessaire de prévoir de moyen particulier pour réceptionner ces messages à enregistrer, qui sont donc tous directement accessibles dans ledit dispositif de gestion de messages 6 en vue de leur enregistrement.

Par conséquent, les caractéristiques précitées conformes à l'invention et permettant d'enregistrer toutes les données relatives à la communication interne/externe, présentent un coût et un encombrement réduits. De plus, ces caractéristiques ne complexifient pas l'architecture dudit système de transmission de données 1.

Dans un premier mode de réalisation particulier, ledit dispositif de codage 13 engendre (et transmet audit dispositif d'enregistrement 14) une trame comportant une trame de type PER comprenant au moins un message de données, ainsi que des informations supplémentaires telles que l'heure, l'état d'avancement du traitement du message et l'application ATC émettrice. De façon usuelle, une trame représente l'ensemble de bits consécutifs formant un bloc à l'intérieur duquel se trouvent des zones pour la transmission de données d'un utilisateur et d'informations de service.

En outre, dans un second mode de réalisation particulier, ledit dispositif de codage 13 engendre (et transmet audit dispositif d'enregistrement 14) une trame PER contenant la totalité des informations destinées au dispositif d'enregistrement des messages. Cette mise en oeuvre passe par la définition d'une syntaxe plus complète que celle utilisée dans le cadre de la communication interne/externe, de préférence les échanges sol/bord. Cette trame est toujours émise par la fonction de traitement des messages.

Comme représenté sur la figure 2, le système de transmission de données 1 conforme à l'invention, qui est embarqué sur l'aéronef A, fait partie d'un ensemble de communication 17 qui comporte, en plus dudit système 1, au moins un poste de transmission de données qui est situé à l'extérieur de l'aéronef A, en particulier un poste 2 de contrôle aérien qui est situé au sol S.

## Revendications

1. Système de transmission de données, qui est embarqué sur un aéronef (A) et qui est destiné à la transmission de données entre l'aéronef (A) et au moins un poste de transmission (2) situé à l'extérieur dudit aéronef (A), lors d'une communication interne/externe, ledit système (1) comportant :
- un dispositif d'émission/réception (3) qui est susceptible d'émettre à l'extérieur de l'aéronef (A) des messages de données sortants et de recevoir de l'extérieur de l'aéronef (A) des messages de données entrants, lesdits messages entrants et sortants qui transitent par ledit dispositif d'émission/réception (3) étant codés ;
- un dispositif de gestion de messages (6) :
. qui est relié audit dispositif d'émission/réception (3) ;
. qui reçoit lesdits messages entrants codés dudit dispositif d'émission/réception (3) et qui transmet lesdits messages sortants codés audit dispositif d'émission/réception (3) ; et
. qui comporte un moyen de codage/décodage (8) codant des messages sortants décodés de manière à former les messages sortants codés ;
- au moins un moyen d'interface homme/machine (9) :
. qui est relié audit dispositif de gestion de messages (6) ;
. qui est susceptible de présenter à un opérateur les messages entrants décodés, qui sont issus dudit dispositif de gestion de messages (6) et qui proviennent dudit poste de transmission (2) situé à l'extérieur dudit aéronef (A) ; et
. qui permet à un opérateur d'engendrer des messages représentant des messages sortants décodés, qui sont ensuite transmis audit dispositif de gestion de messages (6) et qui sont destinés audit poste de transmission (2) situé à l'extérieur dudit aéronef (A) ; et
- un dispositif d'enregistrement (14),
**caractérisé en ce que** :
- ledit moyen de codage/décodage (8) qui décode, de plus, les messages entrants codés de manière à former des messages entrants décodés, est formé de manière à réaliser un codage/décodage de type PER ;
- ledit système (1) comporte, de plus, un dispositif de compression (13) qui réalise une compression pour tout message de données :
. qui est non codé,
. qui est relatif à ladite communication interne/externe,
. qui transite par ledit dispositif de gestion de messages (6), et
. qui est destiné à être enregistré ;
- ledit dispositif de compression (13) comprend au moins une fonction de codage dudit moyen de codage/décodage (8) qui est intégré dans ledit dispositif de gestion de messages (6) et réalise ladite compression sous forme d'un codage de type PER ; et
- ledit dispositif d'enregistrement (14) est relié audit dispositif de codage (13) et est formé de manière à enregistrer, sur au moins un support d'enregistrement (16), tout message de données entrant ou sortant, qui est relatif à ladite communication interne/externe, qui transite par ledit dispositif de gestion de messages (6) et qui est codé selon un codage de type PER.

2. Système selon la revendication 1,
**caractérisé en ce que** ledit dispositif d'enregistrement (14) est un enregistreur de conversations du poste de pilotage de l'aéronef (A).

3. Système selon l'une des revendications 1 et 2,
**caractérisé en ce que** ledit dispositif de codage (13) engendre et transmet audit dispositif d'enregistrement (14), une trame comportant une trame de type PER comprenant au moins un message de données, ainsi que des informations supplémentaires.

4. Système selon l'une des revendications 1 et 2,
**caractérisé en ce que** ledit dispositif de codage (13) engendre et transmet audit dispositif d'enregistrement (14), une trame contenant toutes les données à enregistrer.

5. Ensemble de communication (17) comportant au moins :
- un système de transmission de données (1) qui est embarqué sur un aéronef (A) ; et
- un poste de transmission de données (2) qui est situé à l'extérieur de l'aéronef (A),
**caractérisé en ce que** ledit système de transmission de données (1) est du type de celui spécifié sous l'une quelconque des revendications 1 à 4.

6. Aéronef,
**caractérisé en ce qu'**il comporte un système de transmission de données (1) du type de celui spécifié sous l'une quelconque des revendications 1 à 4.

## Patentansprüche

1. System zur Übertragung von Daten, das an einem Flugzeug (A) installiert ist, und das für die Übertragung von Daten zwischen dem Flugzeug (A) und mindestens einer Station zur Übertragung (2), die sich außerhalb von dem Flugzeug (A) befindet, während einer internen / externen Kommunikation vorgesehen ist, wobei das System (1) umfasst:
- eine Vorrichtung zum Senden / Empfangen (3), die eingerichtet ist, nach außerhalb von dem Flugzeug (A) ausgehende Nachrichten mit Daten zu senden und von außerhalb von dem Flugzeug (A) eingehende Nachrichten mit Daten zu empfangen, wobei die ein- und ausgehenden Nachrichten, die durch die Vorrichtung zum Senden / Empfangen (3) befördert werden, codiert sind;
- eine Vorrichtung zur Verwaltung von Nachrichten (6):
• die mit der Vorrichtung zum Senden / Empfangen (3) verbunden ist;
• die die eingehenden codierten Nachrichten von der Vorrichtung zum Senden / Empfangen (3) empfängt und die ausgehenden codierten Nachrichten der Vorrichtung zum Senden / Empfangen (3) überträgt; und
• die ein Mittel zum Codieren / Decodieren (8) umfasst, das ausgehende decodierte Nachrichten codiert, um ausgehende codierte Nachrichten zu bilden;
- mindestens ein Schnittstellenmittel Mensch / Maschine (9):
• das mit der Vorrichtung zur Verwaltung von Nachrichten (6) verbunden ist;
• das eingerichtet ist, die eingehenden decodierten Nachrichten einem Operator zu präsentieren, die von der Vorrichtung zur Verwaltung von Nachrichten (6) ausgegeben werden und die von der Station zur Übertragung (2) stammen, die sich außerhalb von dem Flugzeug (A) befindet; und
• das es dem Operator ermöglicht, Nachrichten zu erzeugen, die ausgehende decodierte Nachrichten darstellen, die anschließend zu der Vorrichtung zur Verwaltung von Nachrichten (6) übertragen werden und die für die Station zur Übertragung (2) bestimmt sind, die sich außerhalb von dem Flugzeug (A) befindet; und
- eine Vorrichtung zur Aufzeichnung (14),
**dadurch gekennzeichnet, dass**:
- das Mittel zum Codieren / Decodieren (8), das außerdem die eingehenden codierten Nachrichten decodiert, um eingehende decodierte Nachrichten zu bilden, so gebildet ist, um eine Codierung / Decodierung vom PER-Typ zu bilden;
- das System (1) außerdem eine Komprimierungsvorrischtung (13) aufweist, die eine Komprimierung für jede Nachricht mit Daten durchführt:
• die nicht codiert ist,
• die die interne / externe Kommunikation betrifft,
• die von der Vorrichtung zur Verwaltung von Nachrichten (6) befördert wird, und
• die dazu bestimmt ist, aufgezeichnet zu werden;
- die Kompressionsvorrichtung (13) zumindest eine Codierungsfunktion des Mittels zum Codieren / Decodieren (8) umfasst, das in der Vorrichtung zur Verwaltung von Nachrichten (6) integriert ist und das eine Komprimierung als eine Codierung in der Form von dem PER-Typ durchführt; und
- die Vorrichtung zur Aufzeichnung (14) mit der Codiervorrichtung (13) verbunden ist und ausgebildet ist, um auf mindestens einem Aufzeichnungsträger (16) jede eingehende oder ausgehende Nachricht mit Daten aufzuzeichnen, die die interne / externe Kommunikation betrifft, die von der Vorrichtung zur Verwaltung von Nachrichten (6) befördert wird und die gemäß einer Codierung vom PER-Typ codiert ist.

2. System nach Anspruch 1,
**dadurch gekennzeichnet, dass** die Vorrichtung zur Aufzeichnung (14) ein Aufnahmegerät für Konversationen des Cockpits des Flugzeugs (A) ist.

3. System nach einem der Ansprüche 1 und 2,
**dadurch gekennzeichnet, dass** die Codiervorrichtung (13) einen Rahmen erzeugt und zu dem Aufzeichnungsgerät (14) sendet, der einen Rahmen vom PER-Typ umfasst, der mindestens eine Nachricht mit Daten sowie zusätzliche Informationen aufweist.

4. System nach einem der Ansprüche 1 und 2,
**dadurch gekennzeichnet, dass** die Codiervorrichtung (13) einen Rahmen, der alle Daten enthält, die aufgezeichnet werden sollen, erzeugt und an die Aufzeichnungsvorrichtung (14) überträgt.

5. Kommunikationsanordnung (17), die mindestens umfasst:
- ein System zur Übertragung von Daten (1), das an einem Flugzeug (A) installiert ist; und
- eine Station zum Übertragung von Daten (2), die sich außerhalb von dem Flugzeug (A) befindet,
**dadurch gekennzeichnet, dass** das System zur Übertragung von Daten (1) von dem Typ ist, der in einem der Ansprüche 1 bis 4 angegeben ist.

6. Flugzeug,
**dadurch gekennzeichnet, dass** es ein System zur Übertragung von Daten (1) von dem Typ umfasst, der in einem der Ansprüche 1 bis 4 angegeben ist.

## Claims

1. A data transmission system, which is installed on an aircraft (A) and which is intended for the transmission of data between the aircraft (A) and at least one transmission station (2) located outside of said aircraft (A) during an internal/external communication, said system (1) comprising:
- a transmitting/receiving device (3) which is able to transmit outgoing data messages to outside of the aircraft (A) and to receive incoming data messages from outside of the aircraft (A), said incoming and outgoing messages which pass through said transmitting/receiving device (3) being encoded;
- a message management device (6):
• which is connected to said transmitting/receiving device (3);
• which receives said encoded incoming messages from said transmitting/receiving device (3) and which transmits said encoded outgoing messages to said transmitting/receiving device (3); and
• which comprises an encoding/decoding means (8) decoding said encoded incoming messages, in order to form decoded incoming messages, and encoding decoded outgoing messages in order to form said encoded outgoing messages;
- at least one man/machine interface means (9):
• which is connected to said message management device (6);
• which is able to present to an operator the decoded incoming messages, which are output from said message management device (6) and which originate from said transmission station (2) located outside of said aircraft (A); and
• which allows an operator to generate messages representing decoded outgoing messages, which are then transmitted to said message management device (6) and which are to be sent to said transmission station (2) located outside of said aircraft (A); and
- a recording device (14),
**characterized in that**:
- said encoding/decoding means (8) is formed in such a way as to carry out an encoding/decoding of the PER type ;
- said system (1) furthermore comprises a compression device (13) which carries out a compression for any data message:
• which is not encoded,
• which is relative to said internal/external communication,
• which passes through said message management device (6), and
• which is to be recorded;
- said compression device (13) comprises at least one encoding function of said encoding/decoding means (8) which is integrated in said message management device (6) and carries out said compression in the form of an encoding of the PER type; and
- said recording device (14) is connected to said encoding device (13) and is formed in such a way as to record, on at least one recording medium (16) any incoming or outgoing data message, which is relative to said internal/external communication, which passes through said message management device (6) and which is encoded according to an encoding of the PER type.

2. The system as claimed in claim 1, **characterized in that** said recording device (14) is a cockpit voice recorder of the aircraft (A).

3. The system as claimed in one of claims 1 and 2, **characterized in that** said encoding device (13) generates and transmits to said recording device (14) a frame comprising a frame of the PER type comprising at least one data message, together with additional information.

4. The system as claimed in one of claims 1 and 2, **characterized in that** said encoding device (13) generates and transmits to said recording device (14), a frame containing all of the data to be recorded.

5. A communication assembly (17) comprising at least:
- a data transmission system (1) which is installed on an aircraft (A); and
- a data transmission station (2) which is located outside of the aircraft (A),
**characterized in that** said data transmission system (1) is of the type claimed in any one of claims 1 to 4.

6. An aircraft, **characterized in that** it comprises a data transmission system (1) of the type claimed in any one of claims 1 to 4.
